# EUROPÄISCHE PATENTSCHRIFT

(11) **EP 3 105 165 B1**
(45) Veröffentlichungstag und Bekanntmachung des Hinweises auf die Patenterteilung: **07.06.2023**
(21) Anmeldenummer: 15703091.7
(22) Anmeldetag: 09.02.2015
(51) Int. Cl.: B66D 1/58, H02K 7/11, H02K 49/06, B66D 3/22, H02K 7/116

(54) **HEBEZEUG MIT HYSTERESEKUPPLUNG**
LIFTING GEAR COMPRISING A HYSTERESIS CLUTCH
ENGIN DE LEVAGE AVEC ACCOUPLEMENT À HYSTÉRÉSIS

(30) Priorität: 11.02.2014 DE 102014101654
(43) Veröffentlichungstag der Anmeldung: 21.12.2016
(73) Patentinhaber: STAHL CraneSystems GmbH, 74653 Künzelsau (DE)
(72) Erfinder: GOLDER, Markus, 74653 Künzelsau (DE)
(74) Vertreter: Rüger Abel Patentanwälte PartGmbB
(86) Internationale Anmeldenummer: PCT/EP2015/052651
(87) Internationale Veröffentlichungsnummer: WO 2015/121202

(56) Entgegenhaltungen:
- DE-A1- 1 476 715
- DE-C1- 19 757 500
- US-A- 3 573 518
- US-A- 5 294 066

## Beschreibung

Die Erfindung betrifft ein Hebezeug, dessen Antriebsstrang eine Hysteresekupplung aufweist.

Hebezeuge dienen zum Heben von Lasten mittels Ketten, Seile oder sonstiger Zugmittel. Zum Antrieb derselben dient ein Motor, wobei zwischen dem Zugmittel und dem Motor ein Getriebe angeordnet ist.

Es muss sichergestellt sein, dass eine Überlastung des Zugmittels, des Getriebes oder sonstiger Komponenten des Hebezeugs, auch bei fehlerhaften Betriebszuständen, wie beispielsweise dem Hängenbleiben einer Last an einem Hindernis, nicht zur Schädigung des Kettenzugs und insbesondere nicht zum Herabstürzen der Last führt. Dies gilt besonders, wenn das Hebezeug im Horizontalzugbetrieb eingesetzt wird, beispielsweise um Fahrwerke oder Schlitten anzutreiben.

Dazu sieht die US 3,573,518 ein Hebezeug vor, dessen aus Motor und Getriebe bestehender Antriebsstrang eine Hysteresekupplung aufweist. Diese ist in einem eigenen Gehäuse untergebracht, das in Verlängerung des Motorgehäuses angeordnet ist. Die Hysteresekupplung wird von der Motorwelle angetrieben und ist ihrerseits mit der Eingangswelle des Getriebes verbunden. Die Hysteresekupplung umfasst einen mit Permanentmagneten versehen motorgetriebenen Rotor und einer im geringen Abstand zu diesem angeordnete Scheibe aus hysteresebehafteten magnetisierbarem Material. Es ergibt sich ein scheibenförmiger Luftspalt. Die Scheibe ist außerdem elektrisch leitfähig, um schlupfinduzierte Wirbelströme zu generieren. Ein mit der Scheibe verbundener Thermoschalter dient dazu, den Antrieb still zu setzen, wenn ein an der Hysteresekupplung auftretender Schlupf nicht nach kurzer Zeit verschwindet. Die Hysteresekupplung ist dabei so abgestimmt, dass sie nur im Falle einer Überlast einen Schlupf zulässt und ansonsten eine drehfeste Kopplung zwischen beiden Kupplungshälften bewirkt. Außerdem ist die Kupplung lediglich unidirektional in Aufwärtsrichtung wirksam. In der Gegenrichtung wird die Wirkung der Hysteresekupplung durch eine Freilaufkupplung unterbunden, die parallel zu der Hysteresekupplung angeordnet ist. Die Freilaufkupplung dient zur Überwindung des Bremsmoments einer Lastdruckbremse beim Absenken der Last. Das dazu erforderliche Motorstartmoment ist größer als das Moment zum Anheben der Nennlast.

Es ist Aufgabe der Erfindung, ein solches Hebezeug weiter zu verbessern.

Diese Aufgabe wird mit dem Hebezeug nach Anspruch 1 gelöst:
Das erfindungsgemäße Hebezeug weist ein Grenzdrehmoment auf, bei dem die Hysteresekupplung ohne mechanische Reibung zu schlüpfen beginnt. Das Schlupfmoment ist geringer, als das Nennlastdrehmoment. Das Nennlastdrehmoment ist dabei dasjenige Drehmoment, das an der Kupplung auftritt, wenn das Hebezeug die Nennlast, d.h. diejenige Last hebt, für die es maximal zugelassen ist. Der Schlupf ist dabei die Drehzahldifferenz zwischen den Kupplungshälften, geteilt durch die Drehzahl der motorgetriebenen Kupplungshälfte. Durch den vor Erreichen der Nennlast auftretenden Schlupf lässt sich der Betrieb des Hebezeugs in mehreren Aspekten und in mehreren Situationen verbessern:
Beim Anheben einer Last, insbesondere beim Anheben mit hoher Hubgeschwindigkeit, ist eine an eine liegende Last gekoppelte Kette oder ein entsprechendes Seil zunächst schlaff. Es strafft sich bei schnell laufendem Antrieb und hebt die Last ruckartig an. Indem ein Schlupf der Hysteresekupplung vorgesehen ist, bevor das Zugmittel eine der Nennlast entsprechende Zugkraft aufbaut, wird der Laststoß erheblich gedämpft. Schädliche Ruckwirkungen auf das Zugmittel, den sonstigen Antriebsstrang oder die tragende Struktur des Hebezeugs der Krananlage oder dergleichen, werden vermieden oder zumindest erheblich gemindert.

Die Festlegung des Nennlastdrehmoments größer als das Grenzdrehmoment ermöglicht außerdem eine intuitivere Handhabung des Hebezeugs als bisher. Insbesondere beim Anheben unbekannter oder variierender Lasten, gibt die Erfindung im täglichen praktischen Betrieb dem Bediener eine Rückmeldung über die Größe der Last. Bei konstanter Drehzahl des antreibenden Motors werden Lasten, die geringer sind als die Nennlast, bei denen aber das Grenzdrehmoment überschritten ist, sichtbar langsamer angehoben als Lasten, die geringer sind als die Grenzlast (bei der das Grenzdrehmoment erreicht würde). Der Bediener nimmt somit die Annäherung an die Nennlast durch deutlich langsameres Anheben der aufgenommenen Last wahr.

Indem die Hysteresekupplung schon bei einer Teillast, die deutlich geringer ist als die Nennlast, einen Schlupf aufweist, lässt sich ein Sanftanlauf des Hebezeugs auch ohne Invertersteuerung des Motors erreichen. Zum Beispiel verursacht die zum Beschleunigen einer hängenden Last in Heberichtung erforderliche Beschleunigungskraft beim Einschalten eines Motors einen erhöhten Schlupf, so dass die Last langsamer beschleunigen kann als der Motor. Dies gilt auch für Drehzahlumschaltungen, bei denen der Motor sehr schell seine Drehzahl wechselt und zeitweilig erhöhter Schlupf in der Hysteresekupplung verminderte Beschleunigungen der Last und somit eine Verminderung der wirkenden Kräfte zulässt. Ein ähnliches Verhalten kann auch beim Ausschalten des Motors erzielt werden.

Die Hysteresekupplung gestattet insbesondere aufgrund ihrer drehrichtungsunabhängigen Dämpfungswirkung die effiziente Tilgung von Schwingungen. Solche Schwingungen werden durch Ein- und Ausschalten des Motors, durch Drehzahlumschaltungen oder auch durch den Polygoneffekt bei Kettenzügen (Schwingungsanregung der gespannten Kette infolge wechselnder Radien an dem Kettenrad) angeregt. Auf diese Weise kann verhindert werden, dass durch Resonanzkettenschwingung die Nennlast überschritten und somit eine Abschaltung oder andere Gegenmaßnahmen getroffen werden müssen.

Das Grenzdrehmoment, bei dem die Hysteresekupplung anfängt einen von Null verschiedenen Schlupf zu entwickeln, kann zweckentsprechend zum Beispiel auf das höchstens 0,95fache, das 0,9fache, das 0,8fache oder des Nennlastdrehmoments oder in einem anderen Verhältnis zu diesem festgelegt sein. Je niedriger das Grenzdrehmoment festgelegt ist, desto mehr Schlupf lässt die Hysteresekupplung im Normalbetrieb zu und desto größer sind die oben genannten Effekte.

Vorzugsweise weist die Hysteresekupplung bei zunehmendem Schlupf ein ansteigendes übertragenes Drehmoment auf. So wird sichergestellt, dass oberhalb des Grenzdrehmoments liegende Drehmomente übertragen werden können. Die Hysteresekupplung kann auf diese Weise das Anheben von Lasten gestatten, die geringfügig größer sind als die Nennlast. Der Schlupf kann bis zu 1 (d.h. 100%) betragen. Vorzugsweise liegt die von dem Hebezeug bei Schlupf 1 erzeugte Kraft innerhalb eines Toleranzbereichs von Kräften, die noch nicht zur Schädigung des Hebezeugs oder seiner Tragstrukturen führen.

Die Hysteresekupplung ist darauf ausgelegt, einen längerzeitigen Betrieb mit hohem Schlupf zuzulassen, ohne dass eine Abschaltung des Motors erfolgt. Die Hysteresekupplung erbringt einen passiven Schutz des Hebezeugs und seiner Tragstruktur, bei deren Dimensionierung auf die Kraftbegrenzung durch die Hysteresekupplung vertraut werden darf. Dies ermöglicht die Verminderung von sonst vorzunehmenden Sicherheitszuschlägen bei der Dimensionierung der Anlage, ohne dafür eine Verminderung der Sicherheit hinnehmen zu müssen.

Die Hysteresekupplung kann mit einem Drehzahlerfassungsmittel verbunden sein. Zu diesem gehört mindestens ein drehzahl- und/oder drehwinkelabhängiges Mittel, wie z.B. ein Drehzahlsensor, ein Fliehkraftschalter, ein Drehzahlwächter, ein Drehzahlschalter, ein Resolver oder ähnliches. Das Drehzahlerfassungsmittel kann als Absolutwertgeber oder als inkrementeller Geber ausgebildet sein. Vorzugsweise ist das Drehzahlerfassungsmittel wenigstens der abtriebsseitigen Kupplungshälfte zugeordnet, um diese hinsichtlich ihrer Drehzahl zu überwachen. Optional kann ein weiteres Drehzahlerfassungsmittel die eingangsseitige Kupplungshälfte drehzahlmäßig erfassen und überwachen. Dieses Drehzahlerfassungsmittel kann auch in den Motor eingebaut sein. Drehzahlerfassungsmittel jeder oben genannter Bauart werden nachfolgend zusammenfassend stets als "Drehzahlsensor" bezeichnet.

Eine Auswerteeinrichtung kann die von den Drehzahlsensoren erfassten Drehzahlen vergleichen und insbesondere die Drehzahldifferenz ermitteln. Die Drehzahldifferenz (motorseitige Kupplungsdrehzahl minus getriebeseitige Kupplungsdrehzahl), geteilt durch die motorseitige Kupplungsdrehzahl ist der Schlupf. Vorzugsweise ist die Drehmoment/ Schlupf-Kennlinie linear ansteigend. Oberhalb des Grenzdrehmoments kann der erfasste Schlupf als Maß für die vom Hebezeug aufgebrachte Kraft dienen. Dies gilt auch bei nichtlinearen Drehmoment/Schlupf-Zusammenhang.

Bei einer erfindungsgemäßen Ausführungsform ist die Hysteresekupplung in einem Ölbad angeordnet. Dieses Ölbad kann Teil der Ölfüllung des Getriebes oder ein gesondertes Ölvolumen sein. Die Hysteresekupplung kann in dem Getriebegehäuse angeordnet sein. In beiden Fällen kann das Ölbad effizient zur Kühlung der Hysteresekupplung genutzt werden, indem es die an einer Kupplungshälfte entstehende Wärme aufnimmt und an das Gehäuse des Hebezeugs abgibt, um die Wärme in die Umgebung zu leiten. Insbesondere kann die Hysteresekupplung mit einem Ölstrom in Berührung stehen, der von dem Getriebeöl gebildet wird. Dadurch wird die durch Schlupf in Wärme umgewandelte Leistung so effizient abgeführt, dass der Dauerbetrieb des Hebezeugs mit Schlupf ermöglicht wird.

Vorzugsweise ist die Hysteresekupplung zylindrisch aufgebaut, mit innen liegendem permanentmagnetischem Rotor und mit außen liegendem hohlzylindrischem Hysteresering, der in Betrieb einer erheblichen Erwärmung unterliegen kann. Indem dieser radial außen angeordnet ist, ist eine einfache und effiziente Kühlung möglich.

Der Luftspalt der Hysteresekupplung kann frei von Öl oder bedarfsweise auch ölgefüllt sein. Im letzteren Fall kann im Luftspalt vorhandenes Öl infolge seiner Viskosität und/oder infolge hydrodynamischer Effekte zu einer zusätzlichen Drehmomentübertragung führen. Es ist möglich, die mit zunehmender Erwärmung des im Luftspalt befindlichen Öls einhergehende Verminderung der Ölviskosität zur Verminderung der Drehmomentübertragung bei dauernder Überlastung zu nutzen, um dem Bediener von weiterer Überlastung des Hebezeugs abzuhalten.

Vorzugsweise weist die Hysteresekupplung einen Luftspalt mit verstellbarer Größe auf. Bei einem zylindrischen Luftspalt kann eine Axialverstellung mindestens einer Kupplungshälfte bei gleich bleibender radialer Luftspaltweite zur axialen Verkürzung desselben genutzt werden, um das Grenzdrehmoment wie gewünscht einzustellen.

Bei einer Hysteresekupplung mit konischem Luftspalt kann eine Axialverstellung mindestens einer Kupplungshälften dazu genutzt werden, den Luftspalt sowohl in seiner radialen als auch in seiner axialen Weite bzw. Länge zu verstellen. Durch Verstellung der Größe des Luftspalts kann das Grenzdrehmoment und/oder die Form und/oder die Steilheit der Drehmoment/Schlupf-Kennlinie verstellt bzw. eingestellt werden.

Eine vorteilhafte Ausführungsform des Hebezeugs weist einen Antriebsstrang mit mindestens einer Bremse auf, wobei wenigstens eine der Bremsen aus Sicht der Hysteresekupplung getriebeseitig angeordnet ist. Wenn die mit dem Getriebe verbundene Bremse auf ein Bremsmoment ausgelegt ist, das mindestens so groß ist, wie die Summe aus dem maximalen Lastmoment und dem maximal von der Hysteresekupplung oder dem Motor aufbringbaren Moment, je nachdem, welches geringer ist, kann ein sicherheitsgerichteter Antrieb erstellt werden. Die Bremse kann die Last auch dann halten, wenn der Motor in beliebiger Richtung unkontrolliert dreht, während die Hysteresekupplung das übertragene Drehmoment auf einen von der Bremse noch sicher aufzunehmenden Wert begrenzt. Sollte ein solcher Fehlerzustand fortbestehen, kann die mechanisch berührungslos arbeitende Hysteresekupplung eine Temperatur erreichen, bei der ein oder mehrere Permanentmagnete schwächer werden oder ganz entmagnetisieren. Damit wird die Drehmomentübertragung abgeschwächt oder unterbrochen. Eine weitere Erwärmung und gefährliche Überhitzung des Antriebs wird dadurch unterbunden. Dies gilt sowohl für Hebezeuge mit stromrichtergeführten Antrieben wie auch für Hebezeuge mit netzgeführten Antrieben.

Bei dieser Anordnung ergeben sich mehrere Vorteile:

Bei einer Betätigung eines Notausschalters stoppt die Bremse das Getriebe und das Zugmittel. Die kinetische Energie des drehenden Motors wird in der Hysteresekupplung ohne Überlastung von Getriebe oder Kupplung in Wärme umgesetzt. Dieses Konzept eignet sich insbesondere zur Anwendung bei Motoren mit hoher Drehzahl von mehr als 1500 oder auch mehr als 3000 Umdrehungen pro Minute, die in Betrieb eine besonders hohe kinetische Energie aufweisen.

Weiter eignet sich das Konzept für sicherheitsgerichtete Antriebe. Wird der Motor beispielsweise über einen Inverter betrieben, der nicht den Vorschriften für sicherheitsgerichtete Inverter genügt, kann die gewünschte Sicherheit dennoch durch die Kombination aus Bremse und Hysteresekupplung erreicht werden. Dies gilt insbesondere, wenn das maximal übertragbare Drehmoment, das bei einem Schlupf von 1 übertragen wird, und das von der Nennlast herrührende Moment von der Bremse mit ausreichender Sicherheit aufgenommen werden kann.

In Verbindung mit einer hinsichtlich des Grenzmoments verstellbar ausgebildeten Hysteresekupplung ergibt sich weiter die Möglichkeit der kontrollierten Lastabsenkung im Fehlerfalle. Dazu wird der Motor mit einem geeigneten Werkzeug oder Gegenstand blockiert, so dass er nicht mehr drehen kann. Wenn eine motorseitige Bremse vorhanden ist, kann auch diese zur Blockierung des Motors eingesetzt werden. Es wird dann das Grenzmoment der Hysteresekupplung durch manuelle Verstellung etwas vermindert und dann probeweise manuell die getriebeseitige Bremse gelüftet. Dies wird so lange wiederholt, bis das Grenzmoment so weit abgesenkt worden ist, dass die Last in der Lage ist, die Hysteresekupplung wenigstens langsam zu drehen. Ist diese Einstellung erreicht, kann die getriebeseitige Bremse manuell gelüftet gehalten werden bis die Last kontrolliert auf den Boden oder einer sonstigen Unterlage abgelegt ist. Ein unkontrolliertes Durchrutschen der Last ist dabei wegen des positiven Anstiegs der Drehmoment/Schlupf-Kennlinie ausgeschlossen.

Weitere Einzelheiten vorteilhafter Ausführungsformen der Erfindung ergeben sich aus der Zeichnung oder Beschreibung sowie aus Unteransprüchen. Es zeigen:
Figur 1 ein Hebezeug, in schematischer Gesamtdarstellung,
Figur 2 das Hebezeug nach Figur 1, in schematischer Prinzipdarstellung,
Figur 3 eine Ausführungsform des Hebezeugs nach Figur 1 in einer weiteren Veranschaulichung,
Figur 4 Drehmoment-Schlupf-Kennlinien,
Figur 5 und 6 Zeitdiagramme der Kupplungsdrehzahlen an Kupplungseingang und -ausgang bei verschiedenen Lasten und
Figur 7 Zeitdiagramme des Drehmoments an der Kupplung bei Auftreten von Lastschwingungen.

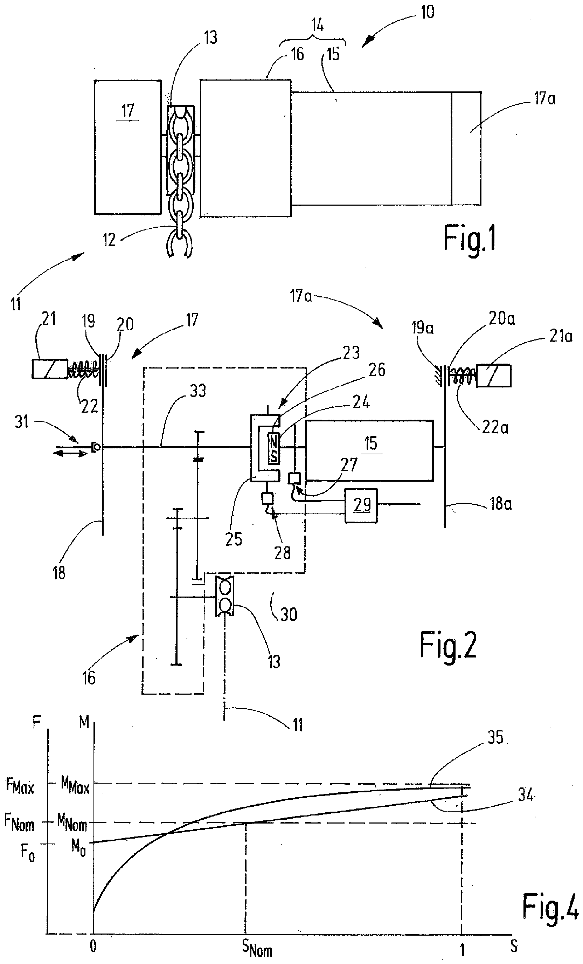

In Figur 1 ist ein Hebezeug 10 veranschaulicht, das Teil eines Krans, einer Krananlage oder dergleichen sein kann und dazu dient, Lasten mittels eines Zugmittels 11 beispielsweise in Gestalt einer Rundgliederkette 12, einer anderweitigen Kette eines Seils oder dergleichen, anzuheben. Die Kette 12 läuft dazu über ein Taschenrad 13, das an die Abtriebsseite eines Antriebsstrangs 14 angeschlossen ist. Dieser umfasst einen Motor 15, vorzugsweise Elektromotor, sowie vorzugsweise ein Getriebe 16. Der Motor 15 kann ein Asynchronmotor, Synchronmotor oder ein sonstiger Elektromotor, ein Hydraulikmotor, ein Pneumatikmotor oder eine sonstige Antriebsquelle sein. Dies gilt für alle Ausführungen des Hebezeugs 10. Im einfachsten Fall kann es sich um einen netzbetriebenen ein- und ausschaltbaren Motor mit einer einzigen festen Drehzahl handeln. Alternativ kann der Motor 15 durch Polumschaltung als netzbetriebener Motor mehrere Drehzahlen einnehmen. Bei einer besonders komfortablen Ausführungsform wird der Motor 15 mittels eines Inverters drehzahlvariabel betrieben.

Das Getriebe 16 ist ein Untersetzungsgetriebe, das eine hohe Motordrehzahl in eine niedrige Drehzahl des Taschenrads 13 umsetzt, um Lasten anzuheben und abzusenken. Vorzugsweise ist das Getriebe 16 ein Zahnradgetriebe ohne Selbsthemmung. Bedarfsweise kann es jedoch auch selbsthemmende Komponenten, wie ein Schneckengetriebe, enthalten.

An dem Antriebsstrang 14 ist eine getriebeseitige Bremse 17 angeschlossen. Vorzugsweise handelt es sich dabei um eine Scheibenbremse mit einer Bremsscheibe 18, der Bremsklötze 19, 20 zugeordnet sind. Diese sind vorzugsweise durch Kraft einer Feder 22 auf die Bremsscheibe 18 hin gespannt. Sie können durch einen oder mehrere Elektromagnete 21 gelüftet werden, um die Bremsscheibe 18 freizugeben.

Das Getriebe 16 ist, wie Figur 2 schematisch erkennen lässt, ein Untersetzungsgetriebe, das über eine Hysteresekupplung 23 mit dem Motor 15 verbunden ist. Die Hysteresekupplung 23 weist dazu eine eingangsseitige Kupplungshälfte 24, die mit der Abtriebswelle des Motors 15 verbunden ist und eine getriebeseitige Antriebshälfte 25 auf, die mit der Eingangswelle des Getriebes 16 verbunden ist. Einer der Wellen des Getriebes 16 ist mit der Bremse 17 verbunden. Die Hysteresekupplung 23 weist vorzugsweise eine zylindrische Grundbauform mit einem zylindrischen Luftspalt 26 auf, der zwischen den Kupplungshälften 24, 25 eingeschlossen ist.

Optional kann wenigstens eine der Kupplungshälften 24, 25 mit einem Drehzahlsensor, im einfachsten Falle einem Fliehkraftschalter verbunden sein. Alternativ können auch beide Kupplungshälften 24, 25 mit Drehzahlsensoren 27, 28 verbunden sein, die jeweils ein der Drehzahl der Kupplungshälfte 24 bzw. 25 entsprechendes Signal erzeugen. Die Signale können Schaltsignale, Analogsignale oder Digitalsignale sein, die die Drehzahl und/oder die Phasenbeziehung der Kupplungshälften 24, 25 zueinander kennzeichnen. Die Signale können einer Einheit 29 zur Drehzahlbestimmung, Schlupferfassung und/oder Schlupfbestimmung zugeleitet sein. Der so erfasste Schlupf und/oder die Drehzahl(en) kann (können) als Steuerkriterium für den Betrieb des Motors 15 und/oder der Bremse 17 genutzt werden. Aus dem Schlupf kann der Betrag der Last ermittelt werden.

Die Hysteresekupplung 23 und das Getriebe 16 können, wie Figur 2 schematisch veranschaulicht, in einem gemeinsamen Getriebegehäuse 30 angeordnet sein, das eine Ölfüllung enthält. Das Öl dient zur Schmierung von Lagern und Zahnrädern wie auch dazu, in dem Getriebegehäuse 30 erzeugte Verlustwärme abzuführen. Insbesondere kann das vorhandene Öl dazu genutzt werden, die Verlustwärme der Hysteresekupplung 23 an das Getriebegehäuse 30 zu übertragen.

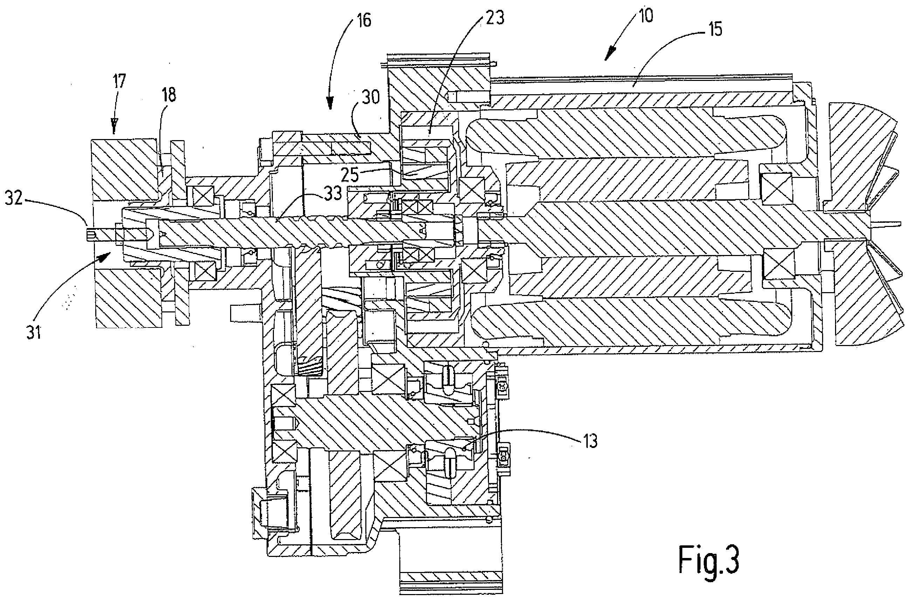

Figur 3 veranschaulicht den Aufbau des Hebezeugs 10 mit der Bremse 17 auf der Getriebeseite auf weniger abstrakte Weise unter Zugrundelegung gleicher Bezugszeichen. Wie ersichtlich, weist das Hebezeug 10 eine Verstelleinrichtung 31 zur Verstellung der Hysteresekupplung 23 auf. Die Verstelleinrichtung 31 umfasst eine Einstellschraube 32, an der sich eine mit der getriebeseitigen Kupplungshälfte 25 verbundene Welle 33 abstützt. Durch Verstellung der Axialposition der Welle 33 wird die axiale Relativposition der Kupplungshälften 24, 25 zueinander und somit die Größe des Luftspalts 26 verstellt.

Das insoweit beschriebene Hebezeug 10 arbeitet wie folgt:
Mit dem Hebezeug 10 lassen sich Lasten bewegen (heben oder auch schräg oder horizontal ziehen), die an das Zugmittel 11 angeschlossen sind. Dies kann an dem freien Ende des Zugmittels 11 oder über eine in einer Hakenflasche angeordnete lose Rolle geschehen, wenn das freie Ende des Zugmittels 11 an einem festen Aufhängepunkt, z.B. an dem Getriebegehäuse 30 befestigt ist. Dreht der Motor 15, überträgt er über die Hysteresekupplung 23 und das Getriebe 16 das Antriebsdrehmoment auf das Taschenrad 13 oder ein sonstiges Wickelrad, um die Last anzuheben oder anderweitig zu bewegen. Ist das Gewicht der Last geringer als eine Grenzkraft F₀, kann dies ohne wesentlichen Schlupf der Hysteresekupplung 23 erfolgen. Ist die Last jedoch größer als die Grenzkraft F₀, jedoch kleiner als die Nennlast F_{Nom} tritt an der Hysteresekupplung 23 Schlupf auf. Der Grenzkraft F₀ entspricht an der Hysteresekupplung 23 ein Grenzdrehmoment M₀. Bei Erreichen dieses Grenzdrehmoments M₀ ist der Schlupf s gerade noch Null. Bei Überschreiten des Grenzdrehmoments M₀ steigt er an. Vorzugsweise weist die Hysteresekupplung 23 dabei eine lineare Kennlinie 34 auf, d.h. das übertragene Drehmoment M nimmt mit zunehmendem Schlupf s zu. Bei Erreichen der Nennlast F_{Nom} liegt an der Hysteresekupplung 23 das Nenndrehmoment M_{Nom} an, wobei sich der Schlupf s_{Nom} ergibt. Der Nennschlupf s_{Nom} liegt zwischen 0 und 1. Er kann zum Beispiel größer als 5% oder 10% sein. Vorzugsweise wird er so gewählt, dass sich die Nennlast noch zügig jedoch mit deutlich verminderter Geschwindigkeit anheben lässt, um dem Bediener zu signalisieren, dass die Nennlast erreicht ist.

Falls bei Nennlast höhere Geschwindigkeiten (z.B. Nenngeschwindigkeit) erreicht werden sollen, kann die Getriebeuntersetzung verringert, d.h. so festgelegt werden, dass trotz Schlupf die gewünschte höhere Geschwindigkeit erreicht wird. Der Vorteil einer solchen Übersetzungswahl liegt darin, dass Teillasten schneller bewegt werden können und die Arbeitseffizienz so steigt.

Es sei angemerkt, dass die Drehmoment/Schlupf-Kennlinie nicht zwingend linear sein muss. Sie kann auch, wie in Figur 4 als Drehmoment/Schlupf-Kennlinie 35 angedeutet, von der Geradenform abweichen, so dass bei Grenzlasten, die geringer sind als die Hälfte der Nennlast F_{Nom}, bereits ein von 0 verschiedener Schlupf auftritt. Vorzugsweise sind solche Kennlinien jedoch degressiv, um bei einem Schlupf gleich 1, d.h. bei einer Blockade des Zugmittels 11, eine Maximalkraft F_{Max} zu erzeugen, die auf einen sicheren Wert begrenzt ist und beispielsweise das 1,5-fache, vorzugsweise das 1,3-fache, weiter vorzugsweise höchstens das 1,2-fache, weiter vorzugsweise höchstens das 1,1-fache der Nennlast F_{Nom} oder einen zwischen den genannten Werten liegenden Wert der Nennlast nicht überschreitet. Bei Vorliegen der Maximalkraft F_{Max} tritt an der Hysteresekupplung 23 das Maximalmoment M_{Max} auf. Unabhängig davon, ob die Drehmoment/ Schlupf-Kennlinie 34 linear oder eine nichtlineare Drehmoment/ Schlupf-Kennlinie 35 vorhanden ist, kann durch Erfassung der Drehzahlen der mindestens der Kupplungshälfte 25 (z.B. mittels Fliehkraftschalters), vorzugsweise beider Kupplungshälften 25, 24 mittels der Drehzahlsensoren 27, 28 der Schlupf bestimmt und auf den Betriebszustand des Hebezeugs 10 geschlossen oder Einfluss genommen werden. Beispielsweise ist es möglich, die Drehzahl des Motors 15 abzusenken, wenn der Nennschlupf s_{Nom} überschritten wird, um dadurch das Anheben von Lasten zu unterbinden, die größer sind als die Nennlast F_{Nom}, jedoch ohne den Motor 15 dabei ganz abzuschalten.

Weiter lässt sich durch die Festlegung des Grenzdrehmoments M₀ kleiner als das Drehmoment M_{Nom} ein sanfter Betrieb des Hebezeugs 10 auch dann erreichen, wenn der Motor 15 ohne Inverter direkt am Netz mit fester Drehzahl betrieben wird.

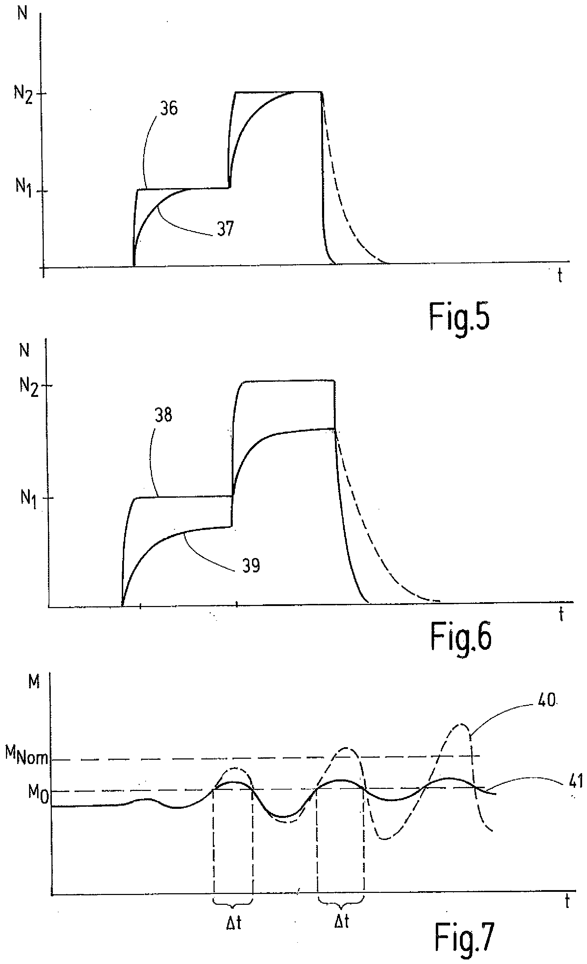

Figur 5 veranschaulicht das Einschalten eines in zwei Drehzahlen N₁, N₂ betreibbaren Motors 15. Die Kurve 36 zeigt den Verlauf der Motordrehzahl und somit der Drehzahl der Kupplungshälfte 24. Die Kurve 37 zeigt den Verlauf der Drehzahl der Kupplungshälfte 25. Während der Beschleunigung der Last nimmt der Schlupf s kurzzeitig zu, so dass die Drehzahl der getriebeseitigen Kupplungshälfte 25 der Drehzahl des Motors 15 verzögert folgt. Auf diese Weise wird eine stoßartige Belastung des Zugmittels 11 vermieden oder vermindert. Entsprechend ist der Effekt auch bei einem Motor 15, der lediglich mit einer einzigen festen Drehzahl zu betreiben ist. Wie ersichtlich, erreicht die Hysteresekupplung 23 jeweils nach einer gewissen Zeit den Schlupf 0, d.h. die Last ist geringer als die Grenzlast F₀.

Figur 6 zeigt den Betrieb bei einem Gewicht der Last, die größer ist als die Grenzlast F₀. Während die Motordrehzahl sich geradezu sprungartig ändert (Kurve 38), folgt die Drehzahl der getriebeseitigen Kupplungshälfte 25 deutlich verzögert, ohne die Motordrehzahl je zu erreichen. Der Betrieb des Hebezeugs 10 ist somit bei Annäherung an die Nennlast F_{Nom} besonders sanft.

Bei Verwendung der optionalen motorseitigen Bremse 17a, entweder als einzige Bremse oder in Kombination mit der getriebeseitigen Bremse kann während eines Stoppvorgangs ebenfalls eine stoßartige Belastung des Zugmittels 11 vermieden oder vermindert werden. Die optionale Bremse 17a ist in Figur 2 veranschaulicht. Sie weist eine Bremsscheibe 18a, Bremsklötze 19a, 20a, eine Schließfeder 22a und einen Elektromagneten 21a auf, der die Bremse 17a gegen die Kraft der Schließfeder 22a lüftet.

Bei der Verwendung von zwei Bremsen 17, 17a, müssen diese so angesteuert werden, dass zuerst die motorseitige Bremse 17a bremst und anschließend - verzögert - die getriebeseitige Bremse 17 bremst. Nach schließen der motorseitigen Bremse 17a fällt die Motordrehzahl 36 und 38 rapide ab. Die Last wird durch die Hysteresekupplung 23, die nun wie eine Hysteresebremse wirkt, sanft abgebremst. Das sanfte Verlangsamen der Last ist in den Figuren 5 und 6 durch gestrichelte Linien veranschaulicht. Nach dem verzögerten Schließen der getriebeseitigen Bremse 17 wird die Last sicher von der getriebeseitigen Bremse 17 gehalten. Das beschriebene Hebezeug mit zwei Bremsen unterstützt die Möglichkeit der kontrollierten Lastabsenkung.

Figur 7 veranschaulicht einen weiteren nützlichen Effekt an dem Hebezeug 10. Dazu ist ein Drehmoment/ZeitDiagramm angegeben, das den Verlauf des Drehmoments M an der Hysteresekupplung 23 im Fall einer Schwingungsanfachung charakterisiert. Eine solche Schwingungsanfachung kann durch den Polygoneffekt des Taschenrads 13 erfolgen. Wenn das drehende, wirkungsmäßig polygonale Taschenrad 13 die Kette 12 mit einer Frequenz anregt, die der Resonanzfrequenz der gespannten Kette entspricht, kann es zu heftigen Oszillationen der Kette kommen. Diese äußern sich in entsprechenden Drehmomentschwankungen, die zur Schädigung des Antriebs und übergeordneter Komponenten, wie z.B. Tragstrukturen führen können. Figur 7 veranschaulicht in einer gestrichelten Linie 40 einen sich so ergebenden Drehmomentverlauf, bei dem das Nenndrehmoment M_{Nom} und somit auch die entsprechende Nennlast F_{Nom} überschritten würde. Jedoch erreicht das durch eine durchgezogene Linie 41 dargestellte Drehmoment an der Hysteresekupplung 23 wiederholt in Zeitabschnitten Δt eine Zone zwischen dem Grenzdrehmoment M₀ und dem Nenndrehmoment M_{Nom}. In dieser Zone ist der Schlupf s verschieden von 0, so dass dem Schwingungsvorgang Energie entzogen und in Wärme umgewandelt wird. Die Schwingung wird dadurch wirksam gedämpft, so dass sie ganz zum Erliegen kommt oder wenigstens das Nenndrehmoment M_{Nom} (und damit die Nennlast F_{Nom}) nicht überschritten wird.

Das erfindungsgemäße Hebezeug 10 weist einen Antriebsstrang 14 auf, der eine Hysteresekupplung 23 enthält. Diese überträgt von einem Antriebsmotor 15 Drehmomente auf ein Getriebe 16 und treibt damit ein Zugmittel 11 an. Die Hysteresekupplung 23 ist so eingestellt, dass sie bereits vor Erreichen der Nennlast F_{Nom} an dem Zugmittel einen deutlich von 0 verschiedenen Schlupf aufweist. Wird das Hebezeug somit vom Bereich oder in der Nähe seiner Nennlast F_{Nom} betrieben, arbeitet es mit dauerndem Schlupf. Die entstehende Verlustwärme wird vorzugsweise über ein Ölbad an die Wand des Getriebegehäuses abgeführt, die somit als Kühlfläche dient.

Das insoweit verbesserte Hebezeug 10 gestattet eine schlankere Dimensionierung und weist verbesserte Betriebseigenschaften auf. Seine Hysteresekupplung 23 ermöglicht die Nutzung als Hysteresebremse bei der kontrollierten Last-Notabsenkung; sie wirkt als Schwingungsdämpfer zur Tilgung von Lastschwingungen; sie kann als sichere Drehmomentbegrenzung im Not-Aus-Falle bei Stillsetzung der Last mittels der getriebeseitigen Bremse 17 und Weiterbetrieb des Motors 16 und/oder zur Lastindikation für den Bediener durch lastabhängige Veränderung der Lasthubgeschwindigkeit bei konstanter Motordrehzahl dienen.

### Bezugszeichenliste:

- 10: Hebezeug
- 11: Zugmittel
- 12: Kette
- 13: Taschenrad
- 14: Antriebsstrang
- 15: Motor
- 16: Getriebe
- 17, 17a: Bremse
- 18, 18a: Bremsscheibe
- 19, 20: Bremsklotz
- 19a, 20a 21, 21a: Elektromagnet
- 22, 22a: Feder
- 23: Hysteresekupplung
- 24: motorseitige Kupplungshälfte
- 25: getriebeseitige Kupplungshälfte
- 26: Luftspalt
- 27: Drehzahlsensor Motor bzw. Kupplungshälfte 24
- 28: Drehzahlsensor Getriebe bzw. Kupplungshälfte 25
- 29: Einheit zur Schlupferfassung
- N_{Motor}: Motordrehzahl
- N_{Getriebe}: Getriebedrehzahl
- s: Schlupf: s = (N_{Motor} - N_{Getriebe})/ N_{Motor}
- 30: Getriebegehäuse
- 31: Verstelleinrichtung
- 32: Einstellschraube
- 33: Welle
- F₀: Grenzkraft
- F_{Nom}: Nennlast
- M₀: Grenzdrehmoment
- M_{Nom}: Nenndrehmoment
- s_{Nom}: Nennschlupf
- 34: Drehmoment/Schlupf-Kennlinie - linear
- 35: Drehmoment/Schlupf-Kennlinie - nichtlinear
- F_{Max}: Maximalkraft
- M_{Max}: Maximalmoment
- N₁, N₂: Motordrehzahlen
- 36: Motordrehzahl
- 37: Drehzahl Getriebeeingangswelle
- 38: Motordrehzahl
- 39: Drehzahl Getriebeeingangswelle
- 40, 41: Linie

## Patentansprüche

1. Hebezeug (10):
mit einem Antriebsstrang (14), der
einen Motor (15), der zur Aufbringung eines Antriebsmoments eingerichtet ist,
und ein Getriebe (16) aufweist,
mit einem Zugmittel (11), das zum Anheben oder Ziehen einer an das Zugmittel angeschlossenen Last eingerichtet und an den Antriebsstrang (14) angeschlossen ist,
mit einer Hysteresekupplung (23), die in dem Antriebsstrang (14) angeordnet und über die das Getriebe (16) mit dem Motor (15) verbunden ist,
wobei die Hysteresekupplung (23) ein Grenzdrehmoment (Mₒ) aufweist, unterhalb dessen sie schlupffrei und oberhalb dessen sie mit Schlupf (s) arbeitet,
wobei für das Hebezeug (10) eine Nennlast (F_{Nom}) festgelegt ist, für die das Hebezeug im Dauerbetrieb maximal zugelassen ist und der ein Nennlastdrehmoment (M_{Nom} ) an der Hysteresekupplung (23) entspricht,
**dadurch gekennzeichnet, dass**
die Hysteresekupplung (23) in einem Ölbad angeordnet ist, und dass das Nennlastdrehmoment (M_{Nom}) größer als das Grenzdrehmoment (Mₒ) ist.

2. Hebezeug nach Anspruch 1, **dadurch gekennzeichnet, dass** das Grenzdrehmoment (M₀) höchstens das 0,95-fache, vorzugsweise höchstens das 0,9-fache, weiter höchstens das 0,8-fache des Nennlastdrehmoments (M_{Nom}) ist und/oder dass ein an der Hysteresekupplung (23) auftretendes Maximaldrehmoment (M_{Max}) höchstens das 1,3-fache, vorzugsweise höchstens das 1,2-fache, weiter vorzugsweise höchstens das 1,1-fache des Nennlastdrehmoments M_{Nom} beträgt.

3. Hebezeug nach einem der vorstehenden Ansprüche, **dadurch gekennzeichnet, dass** die Hysteresekupplung (23) bei zunehmendem Schlupf (s) ein ansteigendes übertragenes Drehmoment aufweist.

4. Hebezeug nach einem der vorstehenden Ansprüche, **dadurch gekennzeichnet, dass** die Hysteresekupplung (23) bei Überschreiten des Grenzdrehmomentes (M₀) einen Schlupf (s) aufweist, der bei Nennlast (F_{Nom}) wenigstens 0,05 beträgt.

5. Hebezeug nach einem der vorstehenden Ansprüche, **dadurch gekennzeichnet, dass** das Zugmittel (11) eine Kette (12) ist und dass der Antriebsstrang (14) zum Anschluss der Kette (12) ein Taschenrad (13) aufweist, und/oder dass der Motor (15) mit zumindest zwei unterschiedlichen Drehzahlen (N₁, N₂) betreibbar ist und/oder dass der Motor (15) ein netzbetriebener polumschaltbarer Motor ist.

6. Hebezeug nach einem der vorstehenden Ansprüche, **dadurch gekennzeichnet, dass** die Hysteresekupplung (23) mit mindestens einem Drehzahlsensor (28) verbunden ist.

7. Hebezeug nach Anspruch 6, **dadurch gekennzeichnet, dass** der mindestens eine Drehzahlsensor mit einer Auswerteeinheit (29) zur Schlupf- und/oder Lasterfassung verbunden ist.

8. Hebezeug nach einem der vorstehenden Ansprüche, **dadurch gekennzeichnet, dass** die Hysteresekupplung (23) zwischen einer inneren Kupplungshälfte (24) und einer äußeren Kupplungshälfte (25) einen zylindrischen oder konischen Luftspalt (26) aufweist.

9. Hebezeug nach Anspruch 8, **dadurch gekennzeichnet, dass** die innere Kupplungshälfte (24) mindestens einen Permanentmagneten und die äußere Kupplungshälfte (25) durch den Permanentmagneten ummagnetisierbares Material aufweist.

10. Hebezeug nach einem der vorstehenden Ansprüche, **dadurch gekennzeichnet, dass** die Hysteresekupplung (23) einen Luftspalt (26) mit verstellbarer Größe aufweist.

11. Hebezeug nach Anspruch 10, **dadurch gekennzeichnet, dass** der Hysteresekupplung (23) eine manuell betätigbare Verstelleinrichtung (31) zugeordnet ist.

12. Hebezeug nach einem der vorstehenden Ansprüche, **dadurch gekennzeichnet, dass** der Antriebsstrang (14) mindestens eine Bremse (17, 17a) aufweist, wobei wenigstens eine der Bremsen (17, 17a) mit dem Getriebe (16) verbunden ist.

13. Hebezeug nach Anspruch 12, **dadurch gekennzeichnet, dass** die mit dem Getriebe (16) verbundene Bremse (17) auf ein Bremsmoment ausgelegt ist, das mindestens so groß ist, wie die Summe aus dem an der Hysteresekupplung (23) auftretendes Maximaldrehmoment (Mₘₐₓ) und dem maximal von der Hysteresekupplung (23) oder dem Motor (15) aufbringbaren Moment, je nachdem, welches geringer ist.

14. Verwendung eines Hebezeugs nach Anspruch 1, bei dem die Hysteresekupplung:
- als Hysteresebremse bei der kontrollierten Last-Notabsenkung
- als Schwingungsdämpfer zur Tilgung von Lastschwingungen
- zur sicheren Drehmomentbegrenzung im Not-Aus-Falle bei Stillsetzung der Last mittels einer getriebeseitigen Bremse (17) und Weiterbetrieb des Motors (16) und/oder
- zur Lastindikation genutzt wird.

## Claims

1. A Lifting gear (10):
with a drive train (14), comprising
a motor (15) configured to apply a driving torque,
and a transmission (16),
having a pulling means (11) arranged to lift or pull a load connected to the pulling means and connected to the drive train (14),
with a hysteresis clutch (23) arranged in the drive train (14) and via which the transmission (16) is connected to the motor (15),
wherein the hysteresis clutch (23) has a limit torque (M₀) below which it operates without slip and above which it operates with slip (s),
wherein a nominal load (F_{Nom}) is defined for the lifting gear (10), for which the lifting gear is maximally permitted in continuous operation and to which a nominal load torque (M_{Nom}) on the hysteresis clutch (23) corresponds,
where the nominal load torque (M_{Nom}) is greater than the limit torque (M₀).

2. The lifting gear according to claim 1, **characterised in that** the limit torque (M₀) is at most 0.95 times, preferably at most 0.9 times, further at most 0,8 times the nominal load torque (M_{Nom}) and/or **in that** a maximum torque (M_{Max}) occurring on the hysteresis clutch (23) is at most 1.3 times, preferably at most 1.2 times, more preferably at most 1.1 times the nominal load torque M_{Nom}.

3. The lifting gear according to any of the preceding claims, **characterised in that** the hysteresis clutch (23) has an increasing transmitted torque as slip (s) increases.

4. The lifting gear according to one of the preceding claims, **characterised in that** the hysteresis clutch (23), when the limit torque (M₀) is exceeded, has a slip (s) which is at least 0.05 at nominal load (F_{Nom})

5. The lifting gear according to one of the preceding claims, **characterised in that** the pulling means (11) is a chain (12) and **in that** the drive train (14) for connecting the chain (12) has a pocket wheel (13), and/or in that the motor (15) may be operated at at least two different rotational speeds (N₁, N₂) and/or **in that** the motor (15) is a mains-operated pole-changing motor.

6. The lifting gear according to any of the preceding claims, **characterised in that** the hysteresis clutch (23) is connected to at least one rotational speed sensor (28).

7. The lifting gear according to claim 6, **characterised in that** the at least one rotational speed sensor is connected to an evaluation unit (29) for slip and/or load detection.

8. The lifting gear according to any of the preceding claims, **characterised in that** the hysteresis clutch (23) has a cylindrical or conical air gap (26) between an inner clutch half (24) and an outer clutch half (25) .

9. The lifting gear according to claim 8, **characterised in that** the inner clutch half (24) has at least one permanent magnet and the outer clutch half (25) has material that may be re-magnetised by the permanent magnet.

10. The lifting gear according to any of the preceding claims, **characterised in that** the hysteresis clutch (23) has an air gap (26) of adjustable size.

11. The lifting gear according to claim 10, **characterised in that** a manually operable adjustment device (31) is associated with the hysteresis clutch (23).

12. The lifting gear according to any one of the preceding claims, **characterised in that** the drive train (14) comprises at least one brake (17, 17a), at least one of the brakes (17, 17a) being connected to the transmission (16).

13. The lifting gear according to claim 12, **characterised in that** the brake (17) connected to the transmission (16) is designed for a braking torque which is at least as great as the sum of the maximum torque (Mₘₐₓ) occurring on the hysteresis clutch (23) and the maximum torque which may be applied by the hysteresis clutch (23) or the motor (15), whichever is the lower.

14. Usage of a lifting gear according to claim 1, wherein the hysteresis clutch is used:
- as a hysteresis brake for controlled emergency load reduction
- as a vibration damper to absorb load vibrations
- for safe torque limitation in the event of an emergency stop when the load is brought to a standstill by means of a brake (17) on the transmission side and continued operation of the motor (16) and/or
- for load indication.

## Revendications

1. Engin de levage (10) :
comprenant une ligne d'entraînement (14) qui présente
un moteur (15), conçu pour générer un couple d'entraînement,
et un mécanisme de transmission (16),
comprenant un moyen de traction (11) qui est conçu pour soulever ou tirer une charge raccordée au moyen de traction et qui est raccordé à la ligne d'entraînement (14),
comprenant un accouplement à hystérésis (23) qui est disposé dans la ligne d'entraînement (14) et par l'intermédiaire duquel le mécanisme de transmission (16) est relié au moteur (15),
dans lequel l'accouplement à hystérésis (23) présente un couple limite (Mₒ) au-dessous duquel il travaille sans patinage et au-dessus duquel il travaille avec un patinage (s),
dans lequel est définie pour l'engin de levage (10), une charge nominale (F_{Nom}) pour laquelle l'engin de levage est autorisé au maximum en service continu, et à laquelle correspond un couple de charge nominale (M_{Nom}) sur l'accouplement à hystérésis (23),
**caractérisé en ce que**
l'accouplement à hystérésis (23) est disposé dans un bain d'huile, et **en ce que** le couple de charge nominale (M_{Nom}) est supérieur au couple limite (Mₒ).

2. Engin de levage selon la revendication 1, **caractérisé en ce que** le couple limite (Mₒ) vaut au maximum 0,95 fois, de préférence au maximum 0,9 fois, et notamment de préférence au maximum 0,8 fois le couple de charge nominale (M_{Nom}), et/ou **en ce qu'**un couple maximal (M_{Max}) apparaissent sur l'accouplement à hystérésis (23) vaut au maximum 1,3 fois, de préférence au maximum 1,2 fois, et notamment de préférence au maximum 1,1 fois le couple de charge nominale (M_{Nom}).

3. Engin de levage selon l'une des revendications précédentes, **caractérisé en ce que**, en cas de patinage (s) croissant, l'accouplement à hystérésis (23) présente un couple transmis qui augmente.

4. Engin de levage selon l'une des revendications précédentes, **caractérisé en ce que**, en cas de dépassement du couple limite (Mₒ), l'accouplement à hystérésis (23) présente un patinage (s) qui est au moins de 0,05 en présence de la charge nominale (F_{Nom}).

5. Engin de levage selon l'une des revendications précédentes, **caractérisé en ce que** le moyen de traction (11) est une chaîne (12) et **en ce que** pour le raccordement de la chaîne (12), la ligne d'entraînement (14) présente une roue à alvéoles (13), et/ou **en ce que** le moteur (15) peut être actionné avec au moins deux vitesses de rotation (N₁, N₂) différentes, et/ou **en ce que** le moteur (15) est un moteur à pôles commutables, fonctionnant sur secteur.

6. Engin de levage selon l'une des revendications précédentes, **caractérisé en ce que** l'accouplement à hystérésis (23) est relié à au moins un capteur de vitesse de rotation (28).

7. Engin de levage selon la revendication 6, **caractérisé en ce que** le capteur de vitesse de rotation, au nombre d'au moins un, est relié à une unité d'évaluation (29) en vue de la mesure du patinage et/ou de la charge.

8. Engin de levage selon l'une des revendications précédentes, **caractérisé en ce que** l'accouplement à hystérésis (23) présente un espace d'air (26) cylindrique ou conique entre un demi-accouplement intérieur (24) et un demi-accouplement extérieur (25).

9. Engin de levage selon la revendication 8, **caractérisé en ce que** le demi-accouplement intérieur (24) présente au moins un aimant permanent, et le demi-accouplement extérieur (25) présente un matériau dont l'aimantation peut être inversée par l'aimant permanent.

10. Engin de levage selon l'une des revendications précédentes, **caractérisé en ce que** l'accouplement à hystérésis (23) présente un espace d'air (26) à dimension réglable.

11. Engin de levage selon la revendication 10, **caractérisé en ce qu'**un dispositif de réglage (31) à actionnement manuel est associé à l'accouplement à hystérésis (23).

12. Engin de levage selon l'une des revendications précédentes, **caractérisé en ce que** la ligne d'entraînement (14) présente au moins un frein (17, 17a), au moins l'un des freins (17, 17a) étant relié au mécanisme de transmission (16).

13. Engin de levage selon la revendication 12, **caractérisé en ce que** le frein (17) relié au mécanisme de transmission (16) est conçu pour un couple de freinage qui est au moins aussi grand que la somme du couple maximal (Mₘₐₓ) apparaissant sur l'accouplement à hystérésis (23) et du couple maximal pouvant être produit par l'accouplement à hystérésis (23) ou le moteur (15), selon celui qui est plus faible.

14. Utilisation d'un engin de levage selon la revendication 1, dans lequel l'accouplement à hystérésis (23) est utilisé
- comme frein à hystérésis lors de l'abaissement d'urgence contrôlé de la charge,
- comme amortisseur de vibrations pour amortir des vibrations de la charge,
- pour la limitation fiable du couple en cas d'arrêt d'urgence, lors de l'immobilisation de la charge au moyen d'un frein (17) côté mécanisme de transmission, et poursuite du fonctionnement du moteur (16) et/ou
- pour l'indication de la charge.
